# EUROPÄISCHE PATENTANMELDUNG

(11) **EP 2 764 766 A1**
(43) Veröffentlichungstag der Anmeldung: **13.08.2014**
(21) Anmeldenummer: 14152106.2
(22) Anmeldetag: 22.01.2014
(51) Int. Cl.: A01F 12/18

(54) **Dreschwerk mit einer Wendetrommel und einer Abstreifrolle**

(30) Priorität: 07.02.2013 DE 102013202050
(71) Anmelder: DEERE & COMPANY, Moline, Illinois 61265-8098 (US)
(72) Erfinder: Fuchs, Volker, 54439 Saarburg (DE); Wilde von Wildemann, Philipp, 66459 Kirkel ot Limbach (DE); Hess, Wolfgang, 66877 Ramstein (DE)
(74) Vertreter: Holst, Sönke

(57) **Zusammenfassung**

Ein Dreschwerk umfasst eine Dresch- oder Abscheidetrommel (22, 28) und eine Wendetrommel (30), die stromab der Dresch- oder Abscheidetrommel (22, 28) und stromauf einer weiteren Trenneinrichtung (32) angeordnet ist. An der Abgabeseite der Wendetrommel (30) ist eine zylindrische, glatte Abstreifrolle (62) dem Hüllkreis der Wendetrommel (30) unmittelbar benachbart angeordnet. Der Abstreifrolle (62) ist ein flächiger Abstreifer (64) zugeordnet.

## Beschreibung

Die Erfindung betrifft ein Dreschwerk, umfassend eine Dresch- oder Abscheidetrommel und eine Wendetrommel, die stromab der Dresch- oder Abscheidetrommel und stromauf einer weiteren Trenneinrichtung angeordnet ist.

### Stand der Technik

Ein Dreschwerk eingangs genannter Art ist beispielsweise in der EP 2 014 149 A1 beschrieben. Es umfasst eine Dreschtrommel mit einer zylindrischen, als Glattwalze ausgeführten Abstreiftrommel, eine oberschlächtig arbeitende Fördertrommel, eine Abscheidetrommel und eine Wendetrommel, welche die ausgedroschenen Erntegutreste schließlich einer weiteren Trenneinrichtung in Form eines Strohschüttlers zuführt. Die Wendetrommel ist als Trommel mit entgegen der Drehrichtung nachlaufend abgewinkelten Fingern ausgeführt. Als nachteilig ist dabei anzusehen, dass sich bei feuchtem Wetter geerntetes Erntegut um die Wendetrommel wickeln kann, sodass das Dreschwerk dann verstopft.

Es ist an sich bekannt, das Erntegut mittels zylindrischer, glatter Abstreifrollen von Dreschtrommeln abzulösen, um es anschließend mittels eines weiteren Förderers einer Axialtrenneinrichtung (EP 0 514 820 A1) oder einer tangentialen Abscheidetrommel (EP 2 014 149 A1) zuzuführen.

Weiterhin wurde vorgeschlagen, einer zwischen einer Dreschtrommel und einem Strohschüttler angeordneten Abgabefördertrommel einen kammartigen Abstreifer zuzuordnen, der in Zwischenräume zwischen Mitnehmern der Abgabefördertrommel eingreift (DE 42 09 020 C2, EP 2 481 277 A1), oder den Abstreifer angrenzend an den Hüllkreis der Abgabefördertrommel anzubringen (DE 11 91 160 B1).

### Aufgabe der Erfindung

Die der Erfindung zu Grunde liegende Aufgabe wird darin gesehen, ein Dreschwerk mit einer Wendetrommel bereitzustellen, bei die Gefahr von Wickelproblemen reduziert ist.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Dreschwerk umfasst eine Dreschtrommel oder eine Abscheidetrommel und eine Wendetrommel, die stromab der Dreschtrommel oder der Abscheidetrommel und stromauf einer weiteren Trenneinrichtung angeordnet ist. An der Abgabeseite der Wendetrommel ist eine zylindrische, glatte Abstreifrolle angeordnet. Die Abstreifrolle ist dem Hüllkreis der Wendetrommel unmittelbar benachbart positioniert. Weiterhin ist der Abstreifrolle ein flächiger Abstreifer zugeordnet, d.h. dass er sich lückenlos über die ganze Breite der Abstreifrolle erstreckt.

Auf diese Weise werden durch die glatte Oberfläche der Abstreifrolle Erntegutreste problemlos von der Wendetrommel abgehoben. Der Abstreifer verhindert, dass sich Erntegut um die Abstreifrolle wickelt. Demnach erreicht man auf einfache Weise einen unproblematischen Ernteguttransport, auch bei feuchtem bzw. weichem Stroh.

### Ausführungsbeispiel

In der Zeichnung ist ein nachfolgend näher beschriebenes Ausführungsbeispiel der Erfindung dargestellt. Sie zeigt eine schematische seitliche Ansicht eines Mähdreschers mit einem Mehrtrommeldreschwerk.

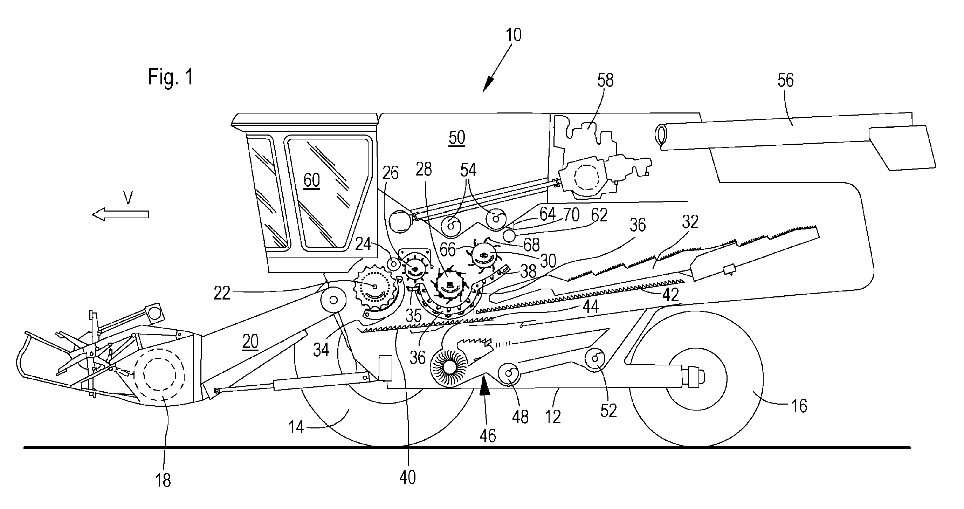

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder anderen, dreschbaren Halmfrüchten von dem Feld zu ernten und es nach oben und hinten durch einen Schrägförderer 20 einem Mehrtrommeldreschwerk zuzuführen, das - in Fahrtrichtung V und Erntegutflussrichtung hintereinander angeordnet - eine Dreschtrommel 22, eine Abstreiftrommel 24, eine oberschlächtig arbeitende Fördertrommel 26, eine Abscheidetrommel 28 sowie eine Wendetrommel 30 umfasst. Stromab der Wendetrommel 30 befindet sich ein Strohschüttler 32 als weitere Trenneinrichtung. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine fest stehende Abdeckung und unterhalb der Abscheidetrommel 28 ein Abscheidekorb 36 mit verstellbaren Fingerelementen befindet. Unterhalb der Wendetrommel 30 ist ein Trennrost 38 angeordnet.

Unterhalb des Mehrtrommeldreschwerks befindet sich ein vorderer Förderboden 40. Ein hinterer Förderboden 42 ist unterhalb des Strohschüttlers 32 angeordnet. Die Förderböden 40, 42 transportieren das Gemisch aus Korn, Kurzstroh und Spreu zu einer Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist.

Die Wendetrommel 30 umfasst einen zylindrischen Körper 66 und um den Körper verteilte, entgegen der Drehrichtung nachlaufend abgewinkelte Mitnehmer 68 zur Förderung des Ernteguts. Die Mitnehmer 68 können sich über die ganze Breite der Wendetrommel 30 oder nur jeweils einen Teilbereich davon erstrecken, wobei im zweiten Fall jeweils mehrere Mitnehmer 68 seitlich nebeneinander angeordnet sind.

Unmittelbar an den Hüllkreis der Wendetrommel 30 angrenzend befindet sich an deren Rückseite und etwas oberhalb ihrer Drehachse eine zylindrische, glatte Abstreifrolle 62. Die Abstreifrolle 62 kann sich frei drehen oder angetrieben werden. Am rückwärtigen, oberen Quadranten der Abstreifrolle 62 greift ein Abstreifer 64 an. Der Abstreifer 64 ist flächig, d.h. glatt und erstreckt sich lückenlos über die ganze Breite der Abstreifrolle 62. Der Abstreifer 64 bildet eine vordere, der Abstreifrolle 62 benachbarte Ecke 70, deren Winkel in der dargestellten Ausführungsform kleiner als 90° ist. Die Abstreifrolle 62 vermeidet oder vermindert Wickelprobleme an der Wendetrommel 30 bei feuchtem bzw. weichem Erntegut. Der Abstreifer 64 streift, wenn nötig, Erntegut von der Abstreifrolle 62 ab.

Es ist anzumerken, dass verschiedene Modifikationen der dargestellten Erfindung möglich sind. So könnte die Wendetrommel 30 auch oberschlächtig arbeiten. Dann wären die Abstreifrolle 62 und der Abstreifer 64 im hinteren, unteren Quadranten der Wendetrommel 30 anzuordnen. Weiterhin könnte der Strohschüttler 32 durch einen oder zwei Axialtrennrotoren ersetzt werden. Schließlich könnten die Abstreiftrommel 24, die Fördertrommel 26 und die Abscheidetrommel 28 entfallen und die Wendetrommel 30 mit der Abstreifrolle 62 somit direkt stromab der Dreschtrommel 22 angeordnet werden.

## Patentansprüche

1. Dreschwerk, umfassend eine Dresch- oder Abscheidetrommel (22, 28) und eine Wendetrommel (30), die stromab der Dresch- oder Abscheidetrommel (22, 28) und stromauf einer weiteren Trenneinrichtung (32) angeordnet ist, **dadurch gekennzeichnet, dass** an der Abgabeseite der Wendetrommel (30) dem Hüllkreis der Wendetrommel (30) unmittelbar benachbart eine zylindrische, glatte Abstreifrolle (62) angeordnet ist, und dass der Abstreifrolle (62) ein flächiger Abstreifer (64) zugeordnet ist.

2. Dreschwerk nach Anspruch 1, wobei die Trenneinrichtung ein Strohschüttler (32) ist.

3. Dreschwerk nach Anspruch 1 oder 2, wobei der Wendetrommel (30) unterseitig ein Trennrost (38) zugeordnet ist.

4. Dreschwerk nach einem der Ansprüche 1 bis 3, wobei die Wendetrommel (30) einen zylindrischen Körper (66) und daran befestigte Mitnehmer (68) aufweist, die entgegen der Drehrichtung nachlaufend abgewinkelt sind.

5. Dreschwerk nach einem der Ansprüche 1 bis 4, wobei das Dreschwerk eine Dreschtrommel (22) und eine Abscheidetrommel (28) enthält und die Wendetrommel (30) stromab der Abscheidetrommel (28) angeordnet ist.

6. Mähdrescher (10) mit einem Dreschwerk nach einem der Ansprüche 1 bis 5.
